# EUROPEAN PATENT SPECIFICATION

(11) **EP 3 336 502 B1**
(45) Date of publication and mention of the grant of the patent: **19.08.2020**
(21) Application number: 16204396.2
(22) Date of filing: 15.12.2016
(51) Int. Cl.: G01L 9/00, G01L 9/10, G01L 13/02, G01L 13/06

(54) **DIFFERENTIAL PRESSURE SENSOR**
DIFFERENZDRUCKSENSOR
CAPTEUR DE PRESSION DIFFÉRENTIELLE

(43) Date of publication of application: 20.06.2018
(73) Proprietor: Gealan Formteile GmbH, 95145 Oberkotzau (DE)
(72) Inventor: Saunus, Christian, 08223 Grünbach (DE); Müller, Lutz, 08543 Pöhl (DE); Gerstner, Woldemar, 95030 Hof (DE); Von der Grün, Jörg, 95111 Rehau (DE); Pöhlmann, Thomas, 95233 Helmbrechts (DE); Buheitel, Christian, 95111 Rehau (DE)
(74) Representative: Fleuchaus, Michael A.

(56) References cited:
- WO-A1-2012/153304
- US-A- 4 627 292
- US-A- 5 050 634
- US-A- 5 219 041
- US-A1- 2009 050 466

## Description

The present invention is directed to the technical field of pressure measurement, in particular to the technical field of differential pressure measurement. More particularly, the present invention relates to a device for measuring the differential pressure of a fluid in a fluid conduit, e.g. in a hydraulic circuit.

Devices for measuring the differential pressure of a fluid in a fluid conduit are known in the prior art. Such devices often comprise mechatronic sensors for measuring the differential pressure of a fluid. More specifically, at least some of the components of the mechatronic sensors are arranged inside the fluid conduit and are thus often wired or otherwise coupled to an output device arranged outside the fluid conduit.

Therefore, known measuring devices may have the disadvantage that at least portions of the measurement or electronic components have to be sealed fluid tight, which increases complexity and costs of such devices and also reduces their reliability. Also, in pressurized systems, sealing elements are more often subject to failure.

Prior art documents relevant to the invention are the following: US 5 219 041 A, US 5 050 634 A, WO 2012/153304 A1, US 2009/050466 A1 and US 4 627 292 A.

It is an object of the present invention to provide a device for measuring the pressure of a fluid, in particular a differential pressure, the device at least partially overcoming the drawbacks of the prior art devices. In particular, the invention seeks to provide improved, easy to maintain and reliable pressure measurement devices, particularly, but not exclusively, for hydraulic circuits. These objects are solved by a device according to claim 1. Embodiments of the device according to the present invention are subject matter of the dependent claims.

Accordingly, the present invention refers to a device for measuring the pressure of a fluid. The pressure of the fluid may be a static, a dynamic, and/or a stagnating pressure of the fluid, wherein the stagnating pressure is the sum of the static and of the dynamic pressure. In particular, the device according to the present invention is configured to measure the differential pressure of a fluid.

According to the invention, a fluid may for instance be a gas, a liquid, or a liquid-gas-phase.

The device according to the present invention comprises a mantle region, which for example may be at least a portion of a pipe and/or a casing. The mantle region defines a fluid conduit, which in particular is a region internal to the mantle region. The fluid conduit may e.g. be a portion of the interior space of the elements of a hydraulic circuit and/or at least a portion of the interior space of a hydraulic reservoir. The fluid conduit according to this description may be a space inside of which a fluid is in a semi-static condition, i.e. there need not be a continuous flow through said conduit.

Further, the device according to the present invention comprises a detection system comprising a measurement element, at least a first resilient element and a target member. At least a portion of the measurement element, e.g. the entire measurement element, is arranged inside the fluid conduit. Moreover, the target member is arranged inside the fluid conduit and at least a first portion thereof is arranged in a substantially fixed position with respect to the measurement element.

The first resilient element exerts a resilient force on the measurement element, the resilient force opposing a displacement, e.g. at least a displacement of the measurement element along a substantially pre-defined locating path, with respect to a neutral position occupied by the measurement element. Said displacement of the measurement element from the neutral position will in particular cause the first resilient element to exert a resilient force on the measurement element, wherein said resilient force is directed so as to a least partially oppose the displacement of measurement element from the neutral position. In particular, the resilient force is oriented substantially opposite to the displacement. The locating path may in particular be a substantially straight line but can also be a curved line.

The first resilient element may for instance be an elastic element comprising at least an elastomer, wherein said elastomer comprises polymers selected from a group consisting of polyurethane, polyethylene rubber, silicone, polyvinyl chloride, ethylene-vinyl acetate, natural rubber, or combinations thereof. In particular, the elastomer may be in an expanded state, that is, in a foam state.

The first resilient element may also be a cylinder filled with a compressible fluid and sealed with a movable piston, wherein the displacement of the measurement element causes the piston to compress the fluid inside the cylinder.

The first resilient element may also be a spring connected to the measurement element, the spring extending along a given line, e.g. a straight line, and having a given resting length. In this case, the neutral position of the measurement element is in particular the position occupied by the measurement element when the length of the spring is substantially equal to the resting length. Further, if the measurement element is displaced from the neutral position along a given direction of the extension line, the spring will be compressed and/or stretched and will exert a resilient force on the measurement element, the resilient force substantially opposing said displacement.

The measurement element has a first surface and a second surface. The first and the second surfaces are arranged generally opposite one another, i.e. the first and the second surface are oriented in two generally opposite directions. The first and the second surface extend along a first and a second extension path, respectively. Also, the first and the second extension path may be substantially parallel to one another.

Furthermore, the device according to the present invention comprises at least one first position sensor for evaluating the position of the target member along the locating path. In particular, the first position sensor may allow for evaluating the position of the target member inside a portion of the fluid conduit.

For example, the first position sensor may be a proximity sensor, which is able to detect the position of the target member over a certain distance without having to establish any mechanical contacts with the target member. For example, the first position sensor may be a proximity sensor selected from a group comprising capacitive sensors, inductive sensors, photoelectric sensors, or combinations thereof. In particular, the first position sensor has an operating region, the operating direction being e.g. the direction along which the first position sensor is best suitable to evaluate the position of the target member.

The first position sensor is preferably arranged outside the fluid conduit in a substantially fixed position with respect to the mantle region. For example, the first position sensor may be arranged at the mantle region. In particular, the first position sensor is arranged in such a way that the at least part of the locating path extends into the operating region of the first position sensor.

At least a portion of the measurement element is movable, in particular, resiliently movable along the locating path. The movement of said part of the measurement element is responsive to a displacement force acting on the measurement element. In particular, the displacement force is directed along a force direction, which is substantially not perpendicular to the locating path.

The device according to the present invention may comprise at least a stopping element for limiting the motion of said portion of the measurement element along the locating path. For example, for some positions of said portion of the measurement element along the locating path, the stopping element may prevent the measurement element from moving further along the locating path.

The stopping element may be arranged inside the fluid conduit in such a way that a movement of said portion of the measurement element along the locating path puts the measurement element, or another element connected therewith, in contact with the stopping element. Alternatively, the measurement element, or another element connected therewith, may be in contact with the stopping element when the measurement element is in the neutral position, e.g. when the displacement force substantially vanishes.

In particular, the stopping element is arranged on the mantle region or may be integral therewith, e.g. the mantle region may comprise the stopping element. For example, the stopping element may be a protrusion of the mantle region.

The displacement force is generated by at least a differential pressure acting on the measurement element. The differential pressure acting on the measurement element is in particular the difference between the local pressure of the fluid acting on the first surface and the local pressure of the fluid acting on the second surface. In particular, the displacement force is the sum of the forces generated by the pressure of the fluid at the surfaces of the measurement element and/or of the detection system.

For purposes of this invention disclosure, an element is movable or moves along a given movement path if said element is movable and/or moves along a path which is substantially parallel and/or coincident to said movement path. Similarly, a movement along a given movement path is in particular a movement along a path, which is substantially parallel and/or coincident to said movement path.

Finally, the position of the target member along the locating path with respect to the first position sensor depends on the displacement force, e.g. said position may be determined by the displacement force and by the resilient force alone or also be influenced by other parameters. Said position allows for determining the displacement force, and thus the differential pressure acting on the measurement element.

In embodiments of the invention, other parameters, such as the temperature may also be accounted for in determining the displacement force.

For instance, the differential pressure acting on the measurement element generates the displacement force, which induces the displacement of the measurement element from e.g. the neutral position. The first resilient element exerts the resilient force, which counteracts the displacement force and thus opposes said displacement. The final position of the target member is the position in correspondence to which the resilient force substantially balances the displacement force. Therefore, the measurement of the final position of the target member along the locating path allows for evaluating the displacement force, which is known to substantially balance the resilient force. Evaluation of the displacement force thus allows for evaluating the differential pressure acting on the measurement element.

The differential pressure acting on the measurement element may also allow for determining a volume flow rate of the fluid and/or a pressure drop in a hydraulic circuit, such as in the case of a hydraulic circuit of a heating system.

Preferably, the mantle region and/or the measurement element of the device of the invention are made of a hard plastic component, such as plastic materials with relatively good resistance to plastic and elastic deformation. For instance, said hard plastic component may be a rigid material comprising polymers such as polyurethane, polyethylene, polypropylene, polyvinyl chloride, nylon, acrylonitrile, or combinations thereof.

The device according to the present invention allows for evaluating the differential pressure acting on the measurement element by means of a sensor, i.e. the first position sensor, which is arranged outside the fluid conduit. This streamlines the processes producing said device and/or reduces the costs of said processes, since *inter alia* the first position sensor does not have to be sealed. Also, maintenance of the device according to the present invention is relative simple and rapid. Furthermore, the lifetime of the first position sensor is extended, since said position sensor does not have to undergo the pressure forces exerted by the fluids inside the fluid conduits and/or the temperature variations of said fluids.

In an embodiment of the invention the first resilient element is a spring. For example, the first resilient element may be a tension spring, a compression spring, a coil spring, a flat spring, a serpentine spring, a volute spring, a leaf spring and the like. In particular, the spring comprises a first portion and a second portion. The first portion of the spring is coupled with, e.g. connected to, the measurement element. Moreover, the second portion of the spring is coupled with, e.g. connected to, the mantle region.

The spring may extend along a straight extension line and may have a given resting length. In this case, the resilient force is generated when the length of the spring varies, i.e. when the spring is compressed or stretched e.g. along the straight extension line. The resilient force is oriented opposite to the length variation and, under certain conditions (e.g. for sufficiently small displacements of the measurement element), may be substantially proportional to the change in length of the spring.

A spring is an easy-to-produce, relatively cheap device, the use of which as resilient element simplifies the production process of the device according to the present invention and reduces the production costs.

Further, the behavior of the spring under compression and/or stretching, and thus the resilient force exerted by the spring, is well understood and easy to model. The use of a spring as resilient element would thus improve the accuracy of the measurement device according to the present invention.

The mechanical properties, e.g. the elasticity, of a spring depend only marginally on the temperature and thus the behavior of a spring is relatively independent of the operating temperature. Therefore, the use of a spring as resilient element reduces thermal inaccuracies in the measure of differential pressures without the need to perform costly and error-prone thermal compensations by e.g. using thermal sensor arranged inside the fluid conduit and/or at the mantle region.

An embodiment of the invention further comprises a fluid tight separator, which separates a first and a second volume of the fluid conduit. In particular, the separator does not allow fluid to pass through it, i.e. it does not allow fluid to pass from the first to the second volume and *vice versa.*

The separator comprises at least a membrane, e.g. a substantially two-dimensional membrane, the membrane being affixed to the mantle region. In particular, the separator consists of said membrane. Moreover, the local pressure of the fluid acting on the first surface is exerted by the fluid in the first volume and the local pressure of the fluid acting on the second surface is exerted by the fluid in the second volume.

At least a portion of the separator, e.g. the membrane and/or the entire separator, is arranged inside the fluid conduit. Moreover, the separator may be affixed to the mantle region. The connection between the separator and the mantle region may be a positive fit (e.g. a clamped fit, a riveted fit, a snap-fit, and the like), a non-positive fit (e.g. a screwed fit and the like), and/or a material fit (e.g. a glued fit, a soldered fit, a welded fit, and the like). In particular, the connection between the connection region and the mantle region may be an integral connection, such as, e.g. created by multi-component injection or the like.

For example, the separator may consist of a membrane, in particular an elastic membrane, with a border region, the border region being fluid-tightly connected to the mantle region. The connection between the mantle region and the border region of the membrane may be a liquid tight fitting, which may e.g. comprise sealing elements (e.g. a sealing layer) and/or sealing materials (e.g. silicone and the like) arranged between the border region of the membrane and the mantle region. Preferably, the connection between the mantle region and said border region is sealed by a pressing force compressing the membrane against the mantle region(s).

At least a portion of the membrane may be fluid-tightly in contact with at least a portion of the second surface of the measurement element and move together therewith at least along the locating path. In particular, said portion of the membrane and said portion of the second surface may form a fluid tight connection between the membrane and the second surface, connection which may e.g. comprise sealing elements (e.g. a sealing layer) and/or sealing materials (e.g. silicone and the like). Elements of the device (e.g. the target member) may be arranged between the membrane and the second surface of the measurement element.

Preferably, the membrane should not impact significantly the movement of the measurement element along the locating path, i.e. any force exerted by the membrane on the measurement element should be substantially smaller than, e.g. negligible with respect to, the displacement force and the resilient force.

For example, the material of which the membrane is made should preferably be a material with high elasticity so that the membrane may be deformed along at least a deformation direction by e.g. the measurement element without exerting a significant reaction force on the measurement element. In particular, the deformation direction should be substantially non-perpendicular, preferably substantially parallel, to the locating path.

The shape of the membrane may reduce the strain in the material of the membrane when the membrane is deformed along the deforming direction. The reduction of strain leads to a further reduction of the impact of the membrane on the movement of the measurement element. For this purpose, at least a region of the membrane may e.g. have a corrugated shape.

For example, the membrane may have a disk shape, and thus the border may be a circular ring segment at the outside of the disk. In this case, the deforming direction would be along a direction perpendicular to the disk. Moreover, such a membrane may also comprise an annular region with a corrugated shape, in order to reduce the strain in the material of the membrane.

Preferably, the membrane may, at least in part, be composed of an elastic plastic component. The membrane may also be formed of several elastic plastic components of different elasticity so that, for example, the border region of the membrane is made of a stiffer material whereas the internal part of the membrane is made of a more elastic material. This way, the connection between the border region of the membrane and the mantle region is reinforced and can more effectively withstand the force exerted by the measurement element on the membrane.

For purposes of this invention disclosure, the term "elastic plastic components" denotes preferably plastic materials with high elasticity. An elastic plastic component is in particular an elastomer comprising polymers selected from a group consisting of polyurethane, polyethylene rubber, silicone, polyvinyl chloride, ethylene-vinyl acetate, natural rubber, or combinations thereof.

In such configuration, the device according to the present invention allows e.g. for measuring the difference between the pressures, e.g. the static pressures, of the fluid(s) contained in the two volumes of the fluid conduit.

Such embodiment may also be used to measure the pressure loss along a hydraulic circuit, in particular along a hydraulic circuit of a heating system where a first section of the heating system is connected to the first volume and a second section of the heating system is connected to the second volume, without any substantial energy loss, since the separator (e.g. the membrane) constitutes a fluid tight sealing between the segments of the hydraulic circuit connected to the two respective volumes.

Thus, measurement of the pressure loss is performed without substantially altering the hydraulic circuit and thus the presence of the device does not modify the hydraulic properties of the hydraulic circuit in any substantial way. The measurement of the pressure drop between the segments of the hydraulic circuit corresponds in substance to the determination of a substantially static pressure difference between the two segments.

In a further embodiment of the device according to the present invention, at least a portion of the separator, e.g. of the membrane, may be at least transiently fluid permeable, e.g. may allow the fluid to pass through it at least under predefined conditions. For example, such fluid passage can be implemented to be dependent on the fluid pressure, wherein a fluid passage would only happen if the differential pressure between the local pressure acting on the first surface and the local pressure acting on the second surface exceeds a certain threshold. As such, the fluid passage would be in the form of a check valve, which may be implemented by a suitable configuration of the elastic component of the membrane.

For instance, the membrane may comprise a hole, or a plurality of holes, which allow for a passage of limited amounts of fluid. The number, the distribution, and the shape of said holes may be designed so as to optimize the precision and/or the sensitivity of the device according to the requirements.

Alternatively or in conjunction with the above, the connection between the mantle region and the border region of the membrane may be fluid permeable in a similar manner, i.e. a valve-type permeability may be implemented by a suitable configuration of the elastic component.

This way, flow across the membrane may be determined which allows for determination of further fluid parameters, such as viscosity, or alternatively, dynamic pressure changes may be determined substantially irrespective of any static pressure differences.

According to the present invention, the device further comprises at least a second position sensor. In particular, the second sensor has an operating region with a corresponding operating direction.

The first and the second position sensors may be arranged in proximity, in particular substantially adjacent, to one another on the mantle region, e.g. they may be affixed to the mantle region and in contact therewith. Moreover, the two position sensors may be arranged in such a way that, at least for some positions of the target member on the locating path, both sensors are able to sense the target member. This way, the accuracy of the evaluation of the position of the target member along the locating path is improved, since said evaluation is substantially independent on the thermal dilation of the material forming the mantle region.

In particular, the first and the second position sensor may be substantially identical to each other and may be arranged on the mantle region in such a way that the distance between the locating path and the first position sensor is substantially equal to the distance between the second position sensor and the locating path.

For instance, the distance between the locating path and the first position sensor and/or the distance between the second position sensor and the locating path may be distances along a direction perpendicular to the locating path.

According to the present invention, a distance along a reference path between a first element, surface, path, or region and a second element, surface, path, or region is the length of a portion of the reference path, said portion having as first endpoint the intersection between the first element, surface, path, or region and as second endpoint the intersection between the second element, surface, path or region and the reference path.

If the locating path is an arc of a first circle, the two position sensors may be arranged in proximity, e.g. substantially adjacent, to each other along an arc of a second circle, the second circle being concentric to the first one. In this case, the distance along a radial direction between the locating path and the first position sensor is substantially equal to the distance along a radial direction between the locating path and the second position sensor.

For example, if the locating path is a straight line, the two position sensors may be arranged in proximity, e.g. substantially adjacent, to each other along a position line substantially parallel to the locating path. The distance between the locating path and the first position sensor is thus substantially equal to the distance between the locating path and the second position sensor.

This way, the presence of the target member in a position along the locating path may cause the first and the second position sensor to produce a first signal, *S*₁, and a second signal, *S*₂, respectively, such that the ratio *R* = (*S₁* - *S*₂)/(*S₁* + *S*₂) is substantially independent of the distance between the locating path and the position sensors, i.e. of the distance between the locating path and the mantle region.

The ratio *R* is thus insensitive to thermal variations which may cause thermal dilations or contractions of the mantle region and thus lead to variations of the distance between the position sensors and the locating path. The ratio *R* depends linearly on the position of the target member along the locating path.

In particular, the target member may be arranged in such a way that, when the measurement element is in the neutral position, the target member is inside the operating region of the first position sensor.

Alternatively or in conjunction with the above, the device may include two or more sensors which are preferably attached to opposite sides of the device, and wherein the two or more sensors are arranged so as to each sense the position of the target member along the locating path with respect to the respective position sensors. The measurements of the multiple sensors can then be combined to determine a resulting position of the target member along the locating path with a higher accuracy and redundancy, as well as under the elimination of interfering factors, such as temperature dilation of the material forming the mantle portion or mantle portions.

In embodiments comprising a plurality of sensors, the sensors may be of the same type, e.g. multiple inductive sensors, but may also be of different types so as to further eliminate perturbations of various nature, e.g. electromagnetic perturbations, and further improve the accuracy and the reliability of the measurement.

A further embodiment of the device according to the present invention further comprises at least a second resilient element. In particular, the second resilient element exerts a force on the measurement element in the neutral position, force which e.g. is balanced by a substantially equal and substantially opposite force exerted by the first resilient element. In this case, the two resilient elements exert a force on the measurement element already when the measurement element is in the neutral position and thus no preload force has to be exceeded by the differential pressure in order to move the measurement element away from the neutral position. Therefore, even a relatively low differential pressure is measurable, since such a differential pressure is sufficient to cause a detectable movement of the measurement element. The sensitivity of the device according to the present invention is thus improved by the presence of two (or more) resilient elements.

For example, the first and the second resilient element may be a first and a second spring, respectively, the first and the second spring extending along a corresponding given extension line and with a corresponding resting length. The first and the second spring may be attached to a first and a second connection region of the mantle region, respectively. Furthermore, the first and the second spring are attached to the first and the second surface of the measurement element, respectively.

In this case, the first and the second connection region are arranged with respect to each other and with respect to the measurement element in such a way that, when the measurement element is in the neutral position, the first and the second spring are stretched and/or compressed along the corresponding extension line, the corresponding extension lines being e.g. substantially non-perpendicular to the locating path.

For instance, the locating path may be a portion of a straight locating line, the first and the second surface may be substantially perpendicular to the locating line, and the first and the second connection regions may be arranged along the locating line. Moreover, the first and the second spring may be arranged in such a way that the corresponding extension lines substantially coincide with the locating line. In this case, the connecting distance, *d*, i.e. the distance along the locating line between the two connection regions, has to be such that the two springs are stretched or compressed.

In particular, both the first and the second spring are compressed if the connecting distance, *d*, is smaller than the sum of the resting length, *l*₁, of the first spring, of the resting length, *l*₂, of the second spring and of the distance, *s*, along the location line between the two surfaces of the measurement element, that is if *d* < *l₁* + *l₂* + *s.*

Moreover, the first and the second spring may be stretched if the connecting distance, *d*, is larger than the sum of the resting length, *l*₁, of the first spring, of the resting length, *l*₂, of the second spring and of the distance, *s*, along the location line between the two surfaces of the measurement element, that is if *d* > *l₁* + *l₂* + *s*.

In a further embodiment at least a portion of the first position sensor, e.g. the first position sensor, extends at least along a curved plane.

In particular, the curved plane may be along an arc of a third circle or an ellipsis. In this case, a first portion of the target member, e.g. the target member, may extend at least along an arc of a fourth circle, wherein the third and the fourth circle are substantially concentric to one another and e.g. substantially perpendicular to the locating path.

If the fluid conduit and the measurement element are substantially symmetrical around a common symmetry axis, the third and the fourth circle may be comprised in the transverse cross section of the fluid conduit and in a transverse cross section of the measurement element, respectively. This embodiment guarantees relatively precise and reliable measurements in presence of fluid conduit with cylindrical geometry, a geometry which is useful in many hydraulic applications.

Alternatively or in conjunction with the above, at least a portion of the first position sensor, e.g. the first position sensor, extends at least along a flat plane. In this case, a first portion of the target member, e.g. the target member, may extend at least along a second flat plane, which is substantially parallel to the first flat plane.

In an embodiment of the present invention, the fluid conduit and the measurement element comprise a first and a second substantially flat region, respectively, the first and the second flat region being parallel and e.g. in proximity to one another. For example, the fluid conduit and/or the measurement element may have only a partial cylindrical symmetry, e.g. their transverse cross section may substantially constitute the border of a circular segment.

The first position sensor and the target member may be substantially flat and arranged on the first and on the second flat region, respectively. This way, relatively precise and reliable measurements may be obtained in presence of fluid conduits without cylindrical geometry or with partial cylindrical geometry.

In an embodiment of the present invention, the first position sensor is an inductive sensor and the target member is a metallic, magnetic or a magnetisable element.

In particular, the target member may be composed at least in part of a conductive material, wherein the conductive material may be selected from a group comprising metals, electrically conductive plastic components and combinations thereof. For example, the electrically conductive element may comprise a metallic element that may be attached to the measurement element and/or to the first resilient element by a positive fit, a force fit or a material fit. Further, the target member may be composed of a plastic component comprising metallic particles which may be co-injected together with the plastic component of the measurement element and/or of the first resilient element. This way, a measurement element, a resilient element and/or a detection system having an integral target member may be formed.

Alternatively, the first position sensor may be a capacitive sensor and the target member may preferably be formed of an electrically conductive element or a dielectric element. In particular, a dielectric element may be composed at least in part of a dielectric material, for instance a dielectric plastic material. For example, the dielectric element comprises a material of a dielectric constant other than the fluid or the mantle regions dielectric constant.

In an embodiment of the present invention, the first position sensor comprises a first coil electrically connected to a first electric circuit. The first electric circuit may be assembled on a printed circuit board and/or may be an integrated circuit. Moreover, the position of the target member along the locating path with respect to the first position sensor is evaluated by measuring at least an electrical quantity of the first electric circuit.

More specifically, in this case the electric current in at least a portion of the first electric circuit and/or the potential between two points in the first electric circuit depends on the position of the target member with respect to the first coil. For example, if the first electric circuit is a resonant circuit, a variation of the position of the target member with respect to the first coil will dampen the electric current and/or the potential in the first electric circuit thus producing a detectable signal for further processing.

In an embodiment of the device according to the present invention, at least the first position sensor has an operating region with at least an operating direction, wherein the operating direction and the locating path are substantially non-perpendicularto each other. In particular, the operating direction is preferably the direction along which the first position sensor is best suitable to evaluate the position of the target member.

For example, if the mantle region is a pipe extending along a third extension direction and the locating path is substantially non-perpendicular to the third extension direction, the operating direction of the first position sensor may extend at least along the third extension direction, e.g. the extension direction and the operating direction may be substantially parallel to one another.

In this embodiment, the first position sensor allows to measure deforming forces non-perpendicular to the flow of the fluid inside the fluid conduit, e.g. to measure the pressure along the pipe extending along the third extension direction.

For example, the first position sensor may comprise a first coil, which in this case may be a substantially flat and round spiral coil with a given diameter. In this case, the operating direction is substantially perpendicular to the first coil.

The target member may also comprise at least one first region, which may be a circular disk having a first outer surface, the first outer surface having a given target diameter. The target diameter may be substantially equal to the coil diameter and the thickness of the first circular region may be greater than or equal to 30µm. Preferably, this target member is made of a foil or, e.g. by sputtering or other metal deposition.

The target member may be arranged on the measurement element in such a way that the first region is substantially perpendicular to the locating path. Moreover, the first coil and the first region are arranged substantially opposite each other, in particular the first coil is arranged substantially opposite the first region of the target member. Therefore, the locating path and the operating direction are substantially parallel to each other, e.g. they are coincident.

In this embodiment, the differential pressure acting on the measurement element induces a movement of the measurement element along the locating path, which modifies the position of the target member and thus of the first region along the locating path and thus along the operating direction. A variation of the position of the target member, e.g. of the first region, with respect to the first coil and along the operating direction, triggers a variation of the electric current and/or of the potential in the first electric circuit, the latter allowing for determination of the position of the target member with respect to the first position sensor along the locating path .

For example, the first position sensor may comprise the first coil, which in this case is a substantially flat coil. Moreover, the first coil should not have a substantial circular symmetry, e.g. it should not be round. For instance, the first coil could be a substantially triangular or a substantially rectangularspiral, or it may have the form of a substantially elongated ellipsis. In this case the operating direction may be substantially parallel to the first coil. For instance, if the coil is a triangular or an elliptical spiral, the operating direction may be parallel to one of the heights of the first coil or to one of the axes of the first coil, respectively.

Moreover, in this case the detection system and the first position sensor are arranged with respect to each other in such a way that the locating path and the operating direction are substantially parallel to each other, e.g. they are coincident.

The differential pressure acting on the measurement element induces a movement of the measurement element, movement which modifies the position of the target member, and thus of the first region, along the locating path and thus along the operating direction.

A variation of the position of the target member with respect to the first coil and along the operating direction, triggers a variation of the electric current and/or of the potential in the first electric circuit, the latter allowing for determination of the position of the target member with respect to the first position sensor along the locating path.

In another embodiment of the present invention, the first position sensor comprises at least a first electric circuit and a capacitive element electrically connected thereto. Moreover, the capacitive element and the target member constitute a capacitor. Further, the position of the target member along the locating path with respect to the first position sensor is evaluated by measuring at least an electrical quantity of the first electric circuit.

More specifically, the electric current in at least a branch of the electric circuit and/or the potential between two points in the electric circuit depend on the capacitance of the capacitor, which in turn depends on the position of the target member with respect to the capacitive element. Therefore, the position of the target member with respect to the first position sensor in effect influences at least an electrical quantity of the electric circuit.

In an embodiment of the device according to the present invention, the target member is affixed, e.g. releasably affixed, to the measurement element.

The connection between the target member and the measurement element may be a positive fit (e.g. a clamped fit, a riveted fit, a snap-fit, a bolted fit and the like), a non-positive fit (e.g. a screwed fit and the like), and/or a material fit (e.g. a glued fit, a soldered fit, a welded fit, and the like).

The measurement element and the target member may be produced independently from one another and assembled to form the detection system. This may increase the number of possible uses of the measurement element. In particular, the same type of measurement element may be used in two different embodiments of the device, embodiments which have different types of position sensors and thus may require different types of target members.

Alternatively, the target member may be integral with the measurement element, e.g. the measurement element may comprise the target member, i.e. the target member may be embedded in the measurement element, or the target member may be a surface element of the measurement element. The target member may be implemented as a portion of the measurement element having mechanical, electromagnetic, or optical properties deviating from the remaining portions of the measurement element. The target member may also be implemented as a surface component of the measurement element and either be attached to the measurement element or be integral with it.

In a further embodiment of the device according to the present invention, the target member is affixed, e.g. releasably affixed, to the first resilient element.

The connection between the target member and the first resilient element may be a positive fit (e.g. a clamped fit, a riveted fit, a snap-fit, a bolted fit and the like), a non-positive fit (e.g. a screwed fit and the like), and/or a material fit (e.g. a glued fit, a soldered fit, a welded fit, and the like).

The first resilient element and the target member may be produced independently from one another and assembled to form the detection system.

This may increase the number of possible uses of the first resilient element. In particular, the same type of measurement element may be used in two different embodiments of the device, embodiments which have different types of position sensors and thus may require different types of target members.

Alternatively, the target member may be integral with the first resilient element, e.g. the first resilient element may comprise the target member, i.e. the target member may be embedded in the first resilient element, or the target member may be a surface element of the first resilient element. The target member may be implemented as a portion of the first resilient element having mechanical, electromagnetic, or optical properties deviating from the remaining portions of the first resilient element. The target member may also be implemented as a surface component of the first resilient element and either be attached to the first or be integral with it.

In a further embodiment of the device according to the present invention at least a part of the first resilient element, e.g. the entire first resilient element, forms the target member. This way, the construction procedure of the device is substantially simplified and the production costs substantially reduced.

For example, if the first resilient element is a coil spring (e.g. a conductive, magnetic and/or magnetisable coil spring) extending along a given extension direction and having a given number of windings, at least some of said windings may constitute the target member. When the spring is compressed and/or stretched, the distance between the windings, and thus the number of windings sensed by the first position sensor, vary and allow for evaluating the variation of the length of spring and thus the resilient force balancing the displacement force. This ultimately allows for evaluating the differential pressure generating the displacement force.

In an embodiment of the device according to the present invention, the measurement element or the first resilient element comprise a target region, wherein the target member is affixed to the target region.

In particular, at least part of the target region may be composed by a third plastic component, wherein the third plastic component comprises a hard plastic component. Moreover, said plastic component may be a plastic component suitable for a plastic coating process such as the ABS plastic coating process.

In an embodiment of the present invention, the measurement element the detection system, and/or at least part of the device are produced using a multi-component injection moulding process, a metal insert injection moulding process, a metallic coating process, and/or a film back injection moulding process.

For instance, the measurement element and the membrane according to the present invention may be produced together by using a two-component injection moulding process. More specifically, the two-component injection moulding process may comprise the injection moulding of a hard plastic component and the injection moulding of a soft plastic component, wherein the hard plastic component and the soft plastic component compose the measurement element (e.g. the target region thereof) and the membrane, respectively.

If the measurement element, e.g. the target region thereof, is composed by a plastic material and the target member is composed by a metallic component, the detection system may for instance be produced via a metal coating process, wherein the measurement element, e.g. the target region, is coated by the target member.

In another embodiment of the present invention at least a part of the target member, at least a part of the first resilient member, and/or at least a part of the measurement element are composed of an electrically conductive plastic component. A conductive plastic component may for instance be obtained by inserting metal fibres in a plastic granulate.

In this case, the entire detection system may be obtained by means of a conventional multi-component injection moulding, which is a relatively cheap, reliable process streamlining the production process of the device according to the present invention.

In an embodiment, the device according to the present invention comprises processing means connected, e.g. electromagnetically connected, to the first position sensor. In particular, the connection between the processing means and the first position sensor may be achieved using wired or wireless connections.

The processing means may receive an output signal of the first position sensor as a first input and determines the differential pressure acting on the measurement element by way of determination of the position of the target member along the locating path. Said determination accounts for at least a mechanical property of the measurement element (e.g. elasticity, stiffness, and the like), a geometrical property (e.g. shape, dimensions and the like) of the target member, an electromagnetic property (e.g. magnetic permeability, magnetic susceptibility, relative permeability, and the like) of the target member, and/or an electromagnetic property (e.g. inductance and/or capacitance of the components of the first electric circuit) of the first position sensor. Alternatively or in conjunction wit the above, the determination of the position of the target member accounts for at least a mechanical property (e.g. elasticity, stiffness, and the like) and/or for at least a material property, e.g. the dependency of the mechanical properties on the temperature, of the first resilient element.

The processing means may comprise at least a processor (e.g. a central processing units, a digital signal processor and the like) to process the first input and possibly other inputs received by other sensors connected with the processing means. However, analog electronic circuits may also be used for determining the differential pressure acting on the measurement element by way of determination of the position of the target member along the locating. The processing means may further comprise an output interface to deliver information concerning the first position sensor and/or the differential pressure acting on the measurement element.

The determination of the differential pressure acting on the measurement element may e.g. be achieved by using a computational algorithm implemented in the processor, wherein the computational algorithm depends at least on the on the first input and preferably accounts for at least a mechanical property of the measurement element. The determination of the differential pressure acting on the measurement element may be achieved by using a characteristic curve of the first position sensor, i.e. curve which allows for associating the first input to the corresponding differential pressure acting on the measurement element. In this case, the shape of the characteristic curve of the first position sensor depends on at least a mechanical property of the measurement element and/or on at least a mechanical property of the first resilient element.

In a further embodiment, the device according to the present invention comprises at least one temperature sensor arranged inside the fluid conduit and/or on the mantle region. The at least one temperature sensor is connected, e.g. electromagnetically connected, to the first position sensor or to the processing means.

The processing means receive an output signal of the at least one temperature sensor either directly or indirectly as a second input and the determination of the differential pressure acting on the measurement element is based on the second input signal, e.g. on the temperature measured in proximity of the at least one temperature sensor.

For example, the device according to the present invention may comprise a first and a second temperature sensor having the aforementioned features and located in two different positions with respect to the measurement element so that a temperature in the first volume of the device is measured, as well as a temperature in the second volume. For instance, the first temperature sensor may be arranged in proximity of the firstsurface and the second temperature sensor may be arranged in proximity of the second surface.

In this case the determination of the differential pressure acting on the measurement element may also be based on the second input signal providing information about the fluid temperatures in the area of the first temperature sensor and of the second temperature sensor. In particular, said determination may also account for differences between multiple second input signals, e.g. a temperature gradient across the measurement element.

It is realized that the temperature and in particular different temperatures may have effects on the mechanical properties of the resilient element and thus by measuring such temperatures and accounting for them in the course of the determination of the target member position along the locating path, inaccuracies and non-linearities of the device output may be prevented.

The measurement of the temperature may allow for checking the reliability of the device, in particular the lack thereof caused by e.g. the aging of the first resilient element. More specifically, if a known differential pressure is acting on the measurement element, a measurement of the temperature (or of the gradient thereof) inside the fluid conduit allows for evaluating the resilient force and thus for estimating the corresponding displacement of the target element along the locating path. If the displacement caused by the known differential pressure differs from the estimated one, the measurements performed by using the device are no longer reliable and the first resilient element has to be replaced.

The device according to the present invention may be used as an element of a hydraulic circuit, in particular of a heating hydraulic circuit. In particular, the device according to the present invention may be used to measure the pressure loss along a hydraulic circuit of a heating system. The measurement of a pressure loss along a heating hydraulic circuit is in fact crucial for an efficient control of heating systems, for example to avoid potentially dangerous and energy-consuming overheating of the heating system.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- Fig. 1a: is a schematic view of a mantle component of the mantle region of a first embodiment of the device according to the present invention;
- Fig. 1b: is a cross sectional view of the mantle component of the mantle region of the first embodiment of the device, wherein the cross sectional view is along the 1-1 line of Fig. 1a;
- Fig. 2a: is a schematic view of the detection system of the first embodiment of the device;
- Fig. 2b: is a cross sectional view of the detection system of the first embodiment of the device, wherein the cross sectional view is along the 1-1 line of Fig. 2a;
- Fig. 3a: is a schematic view of the separator of the first embodiment of the device;
- Fig. 3b: is a cross sectional view of the separator of the first embodiment of the device, wherein the cross sectional view is along the 1-1 line of Fig. 3a;
- Fig. 4a: is a schematic view of the first embodiment of the device;
- Fig. 4b: is a cross sectional view of the first embodiment of the device, wherein the cross sectional view is along the 1-1 line of Fig. 4a;
- Fig. 5: is a diagram of a hydraulic circuit comprising a device according to the present invention;
- Fig. 6: is a cross sectional schematic view of a second embodiment of the device according to the present invention;
- Fig. 7: is a cross sectional schematic view of third embodiment of the device according to the present invention;
- Fig. 8: is a cross sectional schematic view of a fourth embodiment of the device according to the present invention.
- Fig. 9: is a cross sectional schematic view of a fifth embodiment of the device according to the present invention.
- Fig. 10: is a cross sectional schematic view of a sixth embodiment of the device according to the present invention.
- Fig. 11: is a cross sectional schematic view of a seventh embodiment of the device according to the present invention.

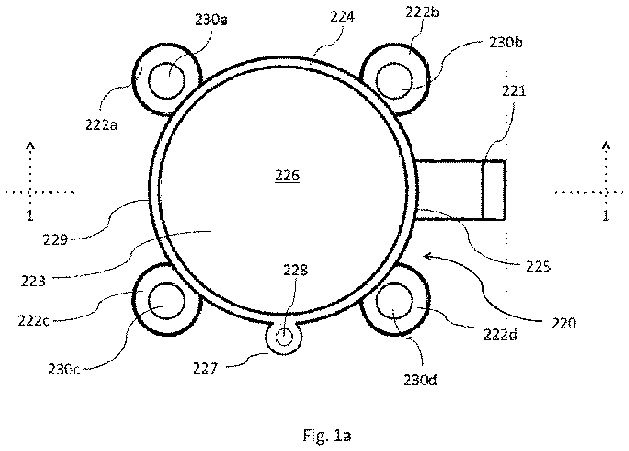

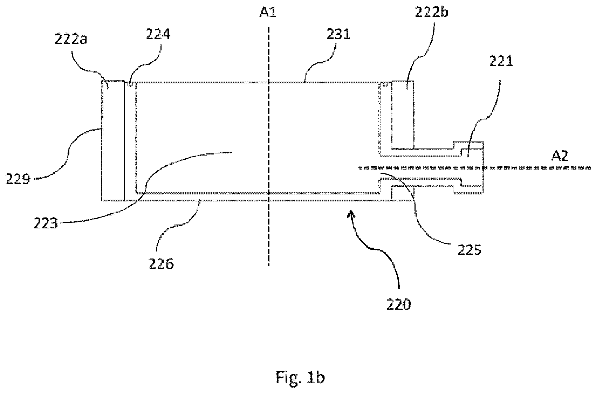

In a first embodiment of the device according to the present invention, the mantle region 220 comprises a first 220' and a second mantle 220" component, which are substantially identical to the mantle component 220 depicted in Fig. 1a and Fig. 1b.

The mantle component 220 comprises a cylindrical volume or tank 223 with a given first axis A1. The cylindrical tank 223 comprises a lateral surface 229, a substantially circular base 226 and a circular opening with substantially the same dimensions of the circular base 226. Said opening is arranged opposite the circular base 226. A circular groove 224 is arranged along the border 231 of the circular opening, with a given distance with respect to the first axis A1.

The cylindrical tank is connected to an at least partially cylindrical conduit 221, which extends along a second axis A2 substantially perpendicular to the first axis A1. This connection is achieved via a connection opening 225, which allows fluid to communicate between the cylindrical conduit 221 and the cylindrical tank 223.

The mantle component 220 comprises four substantially identical substantially cylindrical hollow elements 222a-d, wherein each cylindrical hollow element defines a connecting duct 230a-d. The four hollow elements 222a-d are connected with the lateral surface 229 of the cylindrical tank 223. The hollow elements 222a-d are disposed symmetrically with respect to the cylindrical tank 223 and are arranged in such a way that the axes of the hollow elements 222a-d are substantially parallel to the first axis A1.

Furthermore, the mantle component 220 comprises a substantially cylindrical alignment component 227. The cylindrical alignment component 227comprises a substantially circular base and a substantially circular opening, the circular opening having substantially the same dimensions of said circular base. An alignment pin 228 protrudes from the circular base of the alignment component 227 and is arranged substantially at the center of said circular base.

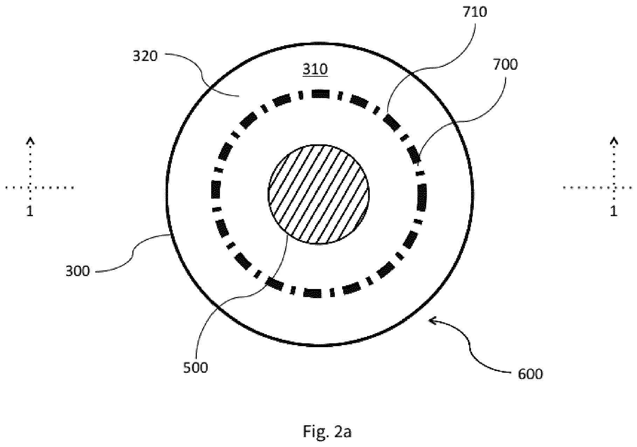

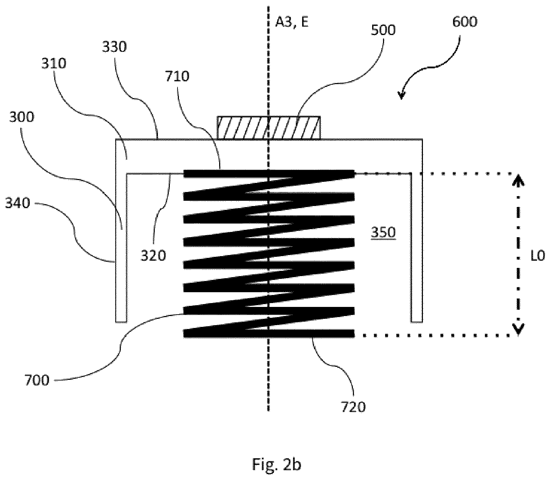

The detection system of the first embodiment of the device according to the present invention is depicted in Fig. 2a and Fig. 2b. The detection system 600 comprises the measurement element 300, the first resilient element 700, and the target member 500.

The measurement element 300 is a hollow cylinder extending along a third axis A3. The hollow cylinder, i.e. the measurement element 300, comprises a lateral surface 340 and a substantially circu lar base 310, which is substantially perpendicular to the third axis A3. Moreover, the measurement element 300 defines an internal volume 350 with an internal border and an opening, the opening being substantially perpendicular to the third axis A3 and having substantially the same dimensions of the circular base 310 of the measurement element 300.

The base 310 of the measurement element 300 comprises the first 320 and the second 330 surface, which are opposite to each other and substantially perpendicular to a third axis A3. In particular, the first surface 320 is part of the border of the internal volume 350 defined by the measurement element 300.

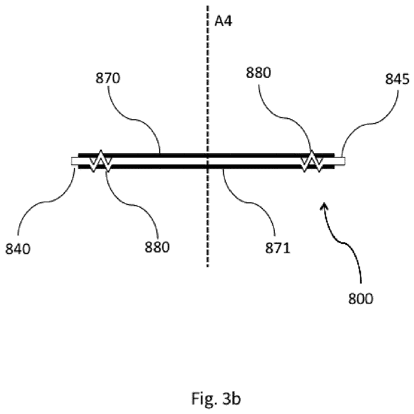

The first resilient element 700 is a spring, e.g. a coil spring, with a given resting length L0, the spring extending along an extension line E. A first end portion 710 of the spring is connected to the first surface 320 of the measurement element 300, while a second end portion 720 of the spring 700 is connected with the mantle region 220, as best shown in Fig. 3b. At least part of the spring 700 is arranged inside the internal volume 350 of the measurement element 300 in such a way that the third axis A3 substantially coincides with the extension line E.

The target member 500 is arranged substantially at the center of the second surface 330 of the measurement element 300. In particular, the target member consists of a metallic element, i.e. a metallic disk, which may be attached to the second surface 330 of the measurement element 300 by a positive fit (e.g. a clamped fit, a riveted fit, a snap-fit, a bolted fit and the like), a non-positive fit (e.g. a screwed fit and the like), and/or a material fit (e.g. a glued fit, a soldered fit, a welded fit, and the like). Alternatively, the target member 500 may be a metallic pin or a metallic washer. Moreover, the target member 500 may composed of a plastic component comprising metallic particles which may be co-injected together with the plastic component of the measurement element.

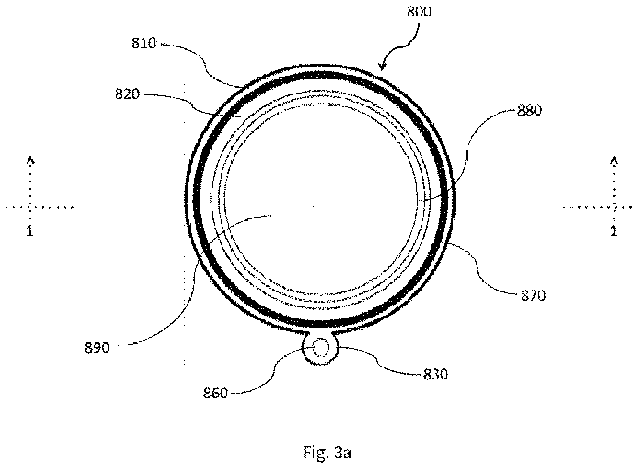

The separator of the first embodiment of the device is shown in Fig. 3a and Fig. 3b and consists of a membrane 800, the membrane 800 comprising a first substantially circular portion 820 and a second substantially circular portion 830. The membrane 800 comprises a ring-shaped border region 810.

The first circular portion 820 comprises a first external surface 840 and a second external surface 845, which are opposite to each other and perpendicular to a fourth axis A4, wherein the fourth axis A4 passes through the center of the first circular portion and is perpendicular to the membrane 800. Moreover, the first circular portion 820 comprises a ring-shaped border region 810 and a central region 890, the central region 890 being closer to the center of the first circular portion 820 than the border region 810. Furthermore, the first circular portion 830 comprises an annular region 880 having a corrugated shape.

A first 870 and a second 871 substantially circular protrusion protrude from the first 840 and the second 845 external surface, respectively. The center of the first 870 and of the second 871 circular protrusions substantially coincides with the center of the first circular portion 820. Moreover, the radius of the first 870 and of the second 871 circular protrusion is substantially equal to the distance between the circular groove 224 and the first axis A1 of the mantle component 220, see Fig. 1a and 1b.

The second circular portion 830 comprises an alignment hole 860, which is arranged substantially at the center of the second circular portion 830. The form and the dimensions of the alignment hole 860 substantially conform to the form and the dimensions of the alignment pin 228 of the mantle component 220 depicted in Fig. 1a.

At least part of the membrane, e.g. at least the central region 890 thereof, is elastically deformable along the fourth axis A4. At least said part of the membrane 800 is composed by at least an elastic plastic component, so that said part membrane 800, e.g. at least the central region 890 thereof, may be deformed along fourth axis A4 by e.g. the measurement element 300 without exerting a significant reaction force on the measurement element 300.

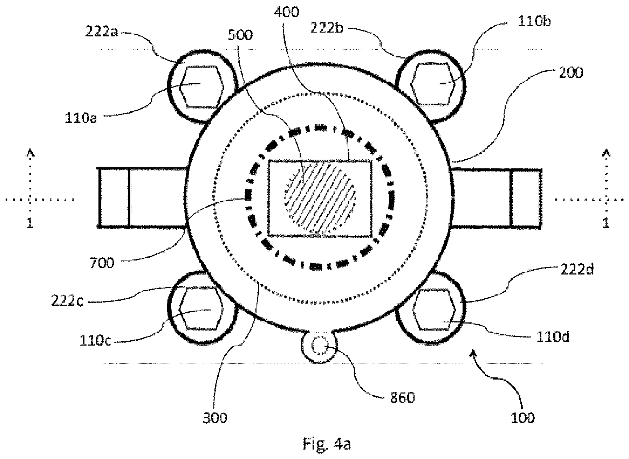

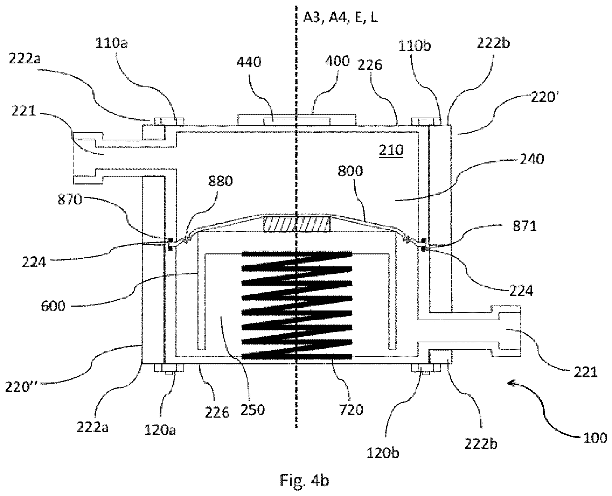

Fig. 4a and Fig. 4b depict the first embodiment of the device 100 according to the present invention. The mantle region 200 comprises the first 220' and the second 220" mantle component, which are arranged in such a way that the first axis A1 of the first mantle component 220' coincides with the first axis A1 of the second mantle component 220".

The axes of each hollow elements 222a-d of the first mantle component 220' coincides with the axes of the corresponding hollow elements of the second mantle component 220". Moreover, the axis of the cylindrical alignment component 227 of the first mantle component 220' coincides with the axis of the cylindrical alignment component 227 of the second mantle component 220".

The border 231 of the opening of the first mantle component 220' is arranged in the proximity of the border 231 of the opening of the second mantle component 220" to build the fluid conduit 210.

Furthermore, the cylindrical conduit 221 of the first mantle component 220' and the cylindrical conduit 221 of the second mantle component 220" are arranged substantially diametrically opposite to each other with respect to the cylindrical volume/tank 223 of the first 220' and to the cylindrical volume/tank 223 of the second mantle component 220". The aforementioned cylindrical conduit 221 may e.g. allow for fluidly connecting the device 100 with other hydraulic components (not shown) via e.g. pipes, in order to allow fluid communication between the device 100 and said hydraulic components.

The first 220' and the second 220" mantle components are connected via four substantially identical bolted connections. Each bolted connection is defined by a connecting bolt 110a-d, by a connecting nut 120a-d, by one of the four connecting duct 230a-d of the first mantle component 220', and by one of the four connecting duct 230a-d of the second mantle component 220'. More specifically, the connecting bolt 110a-d engages the two aforementioned connecting ducts 230a-d and the connecting nut 120a-d to build a fluid-tight bolted connection.

While a bolted connection between the first 220' and the second 220" mantle components is shown, any other connection such as a material fit, e.g. by friction welding or hot plat welding, a force fit, e.g. by clamping, and/or a positive fit, such as by a holding pawl or the likes is possible.

The detection system 600 depicted in Fig. 2a and in Fig. 2b is arranged inside the fluid conduit in such a way that the third axis A3, and thus the elongation line E of the spring 700,coincides with the first axis A1 of the first 220' and with the first axis A1 of the second 220" mantle component. The spring 700 is connected to the base 226 of the second mantle component 220'via e.g. a positive fit (e.g. a clamped fit, a riveted fit, a snap-fit, a bolted fit and the like), a non-positive fit (e.g. a screwed fit and the like), and/or a material fit (e.g. a glued fit, a soldered fit, a welded fit, and the like).

The border region 810 of the membrane 800 is in contact with both the border 231 of the opening of the first mantle component 220' and the border 231 of the opening of the second mantle component 220' to build a fluid-tight connection between the mantle region 200 and the membrane 800. More specifically, the first circular protrusion 870 builds a substantially positive connection with the circular groove of the first mantle component 220', while the second circular protrusion 871 builds a substantially positive connection with the circular groove of the second mantle component 220". Preferably, the membrane 800, e.g. the border region 810 thereof, is grouted between the first 220' and the second 220" mantle components. According to this embodiment the membrane 800 constitutes the fluid tight separator dividing the fluid conduit in a first volume 240 and in a second volume 250.

Moreover, the alignment pin 228 of the first mantle component and the alignment pin 228 of the second mantle component engage the alignment hole 860 of the second circular portion 8303 of the membrane 800.Part of the membrane 800 is in contact with part of the second surface 330 of the measurement element 300. More specifically, part of the membrane 800 and part of the second surface 330 are fluid-tightly connected. The target member 500 is arranged between the second surface 330 and the membrane 800, and in contact therewith.

The first position sensor 400 is connected to the first mantle component 220', and is in contact with the base 226 of the first mantle component 220'. In particular, the first position sensor 400 may be an inductive sensor. The first position sensor 400 comprises the first coil 440, said coil 440 being electrically connected to the first electric circuit (not shown), which is e.g. a resonant circuit. The first coil 440 is a substantially flat, substantially round spiral perpendicular to the third axis A3. Further, the first coil 440 and the metallic washer 530 are arranged substantially in front to each other.

A substantially identical position sensor (not shown), or a position sensor of different type may be connected to the second mantle component 220" substantially opposite the first position sensor 400 relative to the detection system 600 for interacting with the first position sensor 400 in determining the position of the target member 500 along the locating path L while being deflected by a difference in local pressures acting on the first 320 and the second surface 330 of the measurement element 300. Such configuration is also preferable, but not necessary, in cases where temperature sensors are provided in the area of the volume/tank 223 of the first 220' and to the cylindrical volume/tank 223 of the second mantle component 220" so as to determine the temperature of the fluids in these respective tanks. Such temperature values can then serve to calibrate the measurements of the one or multiple position sensors, e.g. by accounting for thermal dilation, and thus render position measurements of the target member 500 to an even higher level of accuracy.

The difference between the pressure of the fluid acting on the first surface 320 (e.g. of the fluid in the first volume 240) and the pressure of the fluid acting on the second surface 330 (e.g. of the fluid in the second volume 250) induces a movement of the measurement element 300 and a deformation of the membrane 800 along the third axis A3, which is the locating path L. the movement of the measurement element 300 modifies the position of the target member 500 along the third axis A3.

A variation of the position of the target member 500 with respect to the first coil 440 and along the third axis A3 triggers a variation of the electric current and/or of the potential in the first electric circuit (not shown). The latter variation allows for evaluating the position of the target member 500 with respect to the first position sensor 400 along the third axis A3.

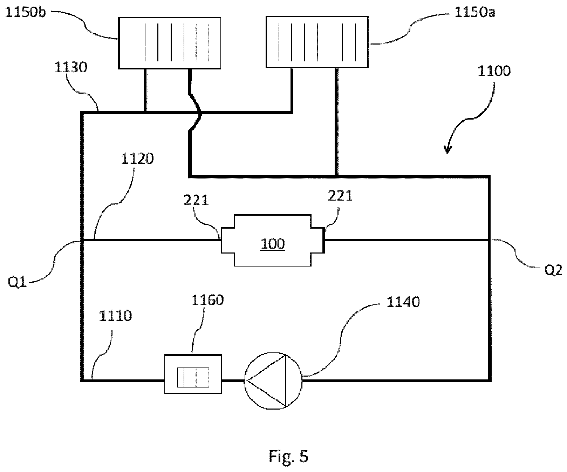

Fig. 5 illustrates an exemplary use of a device of the present invention in a diagram of a hydraulic circuit 1100 comprising the first embodiment of the device according to the present invention. The hydraulic circuit 1100 comprises a first 1110, a second 1120, and a third section 1130.

The first section comprises a hydraulic pump 1140 and a burner 1160, which heats a fluid. The third section 1130 comprises two heat exchangers 1150a 1150b, which e.g. may be radiators for domestic heating. The second section 1120 is connected in parallel with the first 1110 and the third 1130 section and comprises the first embodiment of the device 100 according to the present invention. More specifically, the device 100 is fluidly connected to the pipes of the first section via the cylindrical conduit 221 of the first mantle component 220' and the cylindrical conduit 221 of the second mantle component 220'.

The device 100 according to the present invention is able to measure the pressure loss in the hydraulic circuit 1100 caused by the components of the hydraulic circuits 1100. More specifically, the device 100 is able to measure the difference between the pressure of the fluid in the first volume 240 and the pressure of the fluid in the second volume 250 which are, respectively, in fluid connection with the flow and the return of the heating system. This pressure difference is substantially equal to the pressure difference between the endpoints Q1, Q2 of the third section. This measurement of the pressure loss is performed without substantially altering the hydraulic properties of the hydraulic circuit.

In hydraulic systems of heating installations, the measurement of the pressure difference between the endpoints Q1, Q2 of the third section, i.e. the flow and the return is used to control the burner and the pump and to avoid potentially dangerous and energy -consuming overheating of the hydraulic system.

For example, if all the heat exchangers 1150a 1150b are turned off, the volume flow rate of the third section 1130 will substantially vanish and the pressure difference between the endpoints Q1, Q2 of the third section will increase overtime. The device 100 according to the present invention allows e.g. a control system (not shown) for detecting this behavior and for controlling it. For example, the control system may regulate, e.g. turn off, the burner 1160 and/or the hydraulic pump 1140 in order to avoid the overheating of the hydraulic system.

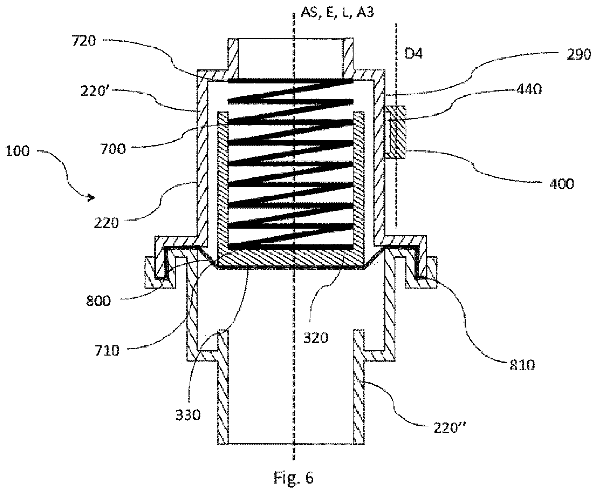

Fig. 6 is an exemplary cross sectional view of a second embodiment of the device according to the present invention. The mantle region 200 has a substantial cylindrical symmetry around a symmetry axis AS and comprises a first 220' and a second 220" mantle component, which are fluid-tightly connected with one another via a substantially positive fit (e.g. via a holding pawl or the likes). Any other connection between the first 220' and a second 220" mantle component, such as a material fit (e.g. by friction welding or hot plat welding), and/or a force fit (e.g. by clamping) is possible.

The first position sensor 400 is affixed to a third connection region 290 of the first mantle component 220' and in contact therewith. The third connection region 290 and the first position sensor 400 extends at least along a fourth extension direction D4, which is substantially parallel to the symmetry axis AS. In particular the first position sensor 400 may be an inductive sensor. The first position sensor 400 comprises the first coil 440, electrically connected to the first electric circuit (not shown), which is e.g. a resonant circuit.

The first coil is a spiral, wherein said spiral should preferably not have a substantial circular symmetry, e.g. it should not be round. For instance, said coil could be a substantially triangular or a substantially rectangular spiral, or it may have the form of a substantially elongated ellipsis. In this case, the operating direction is substantially parallel to the fourth extension direction and thus to the symmetry axis AS. Alternatively, the first coil may also be a substantially round spiral. In particular, the first coil 440 extends along the fourth extension direction D4 and along a curved line (not shown). Said line is an arc of the third circle, the third circle being comprised in the transverse cross section of the first mantle component 220'.

The measurement element 300 is substantially identical to the measurement element 300 of the first embodiment of the device depicted in Fig. 2a and Fig. 2b. In particular, the measurement element is a hollow cylinder with a third axis A3, the third axis substantially coinciding with the symmetry axis AS.

The first resilient element is a spring, the structural features of which are substantially identical to the structural features (e.g. the shape, the symmetries and the like) of the spring 700 of the first embodiment. In particular, the spring extends along the extension line E and comprises a given number of windings. The first end portion 710 of the spring is connected to the first surface 320 of the measurement element 300, while the second end portion 720 of the spring 700 is connected with the first mantle component 220'. At least part of the first resilient element 700 is arranged inside the internal volume 350 of the measurement element 300 in such a way that the third axis A3 substantially coincides with the extension line E.

In this embodiment at least part of the spring 700 forms the target member. Therefore, at least said part of the spring 700 comprises material, which can be sensed by the first coil 440 of the first position sensor 400. In particular, said material is a conductive, magnetic and/or magnetisable material, e.g. a metal or an electrically conductive plastic component.

The separator consists of a substantially disk-shaped membrane 800 and comprises a ring-shaped border region 810 and a central region 890. At least part of the membrane, e.g. at least the central region 890, is elastically deformable along the symmetry axis AS. At least said part of the membrane 800 is composed by at least an elastic plastic component, so that it may be deformed along the symmetry axis AS by e.g. the measurement element 300 without exerting a significant reaction force on the measurement element 300.

The membrane 800, e.g. the border region 810 thereof, builds a substantially positive connection with the first 200' and the second 220" mantle component. Preferably, the membrane 800, e.g. border region 810 thereof, is grouted between the first 220' and the second 220" mantle components. Moreover, part of the membrane 800 is in contact with part of the second surface 330 to form a fluid tight connection between the membrane 800 and the second surface 330.

The differential pressure acting on the measurement element 300 induces a movement of the measurement element 300 along the symmetry axis AS. The locating path L substantially coincides with the symmetry axis AS and is thus parallel to the first coil 440 and to the operating direction.

The movement of the measurement element 300 stretches or compresses the spring 700 and thus induces a modification of the length of the spring 700.

When the spring is compressed and/or stretched, the position of first end point 710 of the spring 700 varies along the locating path L with respect to the second end point of the spring 720. Moreover, the distance between the windings, and thus the number of windings sensed by the first coil 440 of the first position sensors 400, vary as well. Said variation triggers a variation of the electric current and/or of the tension in the first electric circuit, which allows for evaluating the variation of the length of spring and thus the resilient force balancing the displacement force. This ultimately allows for evaluating the differential pressure generating the displacement force.

The third connection region 290 of the first mantle component 220' may also be substantially flat, i.e. the first mantle component may have only a partial cylindrical symmetry. In this case, the first position sensor 440 and the first coil 440 are a substantially flat sensor and a substantially flat spiral, respectively.

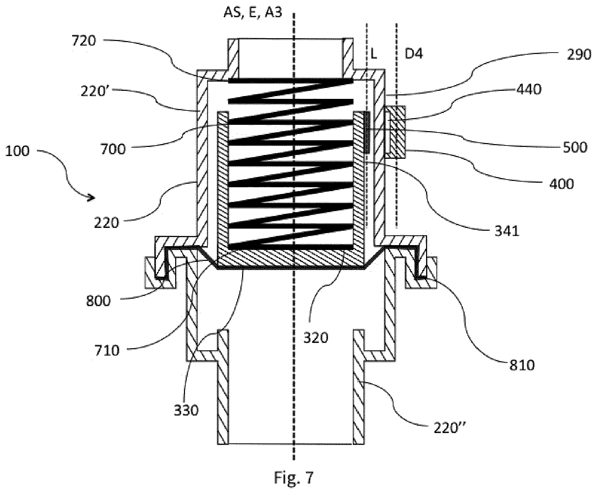

Fig. 7 depicts a cross sectional view of a third embodiment of the device 100 according to the present invention. Said embodiment differs from the second embodiment by the presence of a target member 500, which in this case is not part of the spring 700, and possibly by the material constituting the spring 700.

The target member 500 is arranged on a connection portion 341 of the lateral surface 340 of the measurement element 300. In particular, the target member 500 consists of a metallic element, which may be attached to the lateral surface 340 of the measurement element 300 by a positive fit (e.g. a clamped fit, a riveted fit, a snap-fit, a bolted fit and the like), a non-positive fit (e.g. a screwed fit and the like), and/or a material fit (e.g. a glued fit, a soldered fit, a welded fit, and the like). Alternatively, the target member 500 may be composed of a plastic component comprising metallic particles which may be co-injected together with the plastic component of the measurement element.

In particular, the target element 500 may be a metallic disk extending along an arc of the fourth circle (not shown), wherein said circle is comprised in the transverse cross section of the later al surface 340 of the measurement element 300. Moreover, the target member may be a metallic stripe arranged on the connection portion 341 and extending parallel to the fourth extension direction D4. Alternatively, the target member 500 may be composed of a plastic component comprising metallic particles which may be co-injected together with the plastic component of the measurement element.

The spring 700 of this embodiment may or may not comprise material (e.g. a conductive, magnetic and/or magnetisable material), which can be sensed by the first coil 440 of the first position sensor 400. For instance, the materials constituting the spring 700 may be insulating, non-magnetic, and/or non-magnetisable plastic materials.

The differential pressure acting on the measurement element 300 induces a movement of the measurement element 300, and thus a deformation of the membrane 800, along the symmetry axis AS. Therefore, the locating path L is substantially parallel to the symmetry axis AS and is thus parallel to the first coil 440 and to the operating direction. The movement of the measurement element 300 modifies the position of the target member 500 along the locating path L and thus along the operating direction.

A variation of the position of the target member 500 with respect to the first coil 440 and along the operating direction triggers a variation of the electric current and/or of the tension in the first electric circuit. The latter variation allows for evaluating the position of the target member 500 with respect to the first position sensor 400 along the operating direction, and thus along the locating path L.

If the third connection region of the first mantle component 220' is substantially flat, the connection portion 341 of the measurement element 300 may also be substantially flat, i.e. the measurement has a partial cylindrical symmetry. In this case, the third connecting region 290 and the connection portion 341 are substantially parallel to one another. Moreover, the target member 500 may be a substantially flat metallic disk.

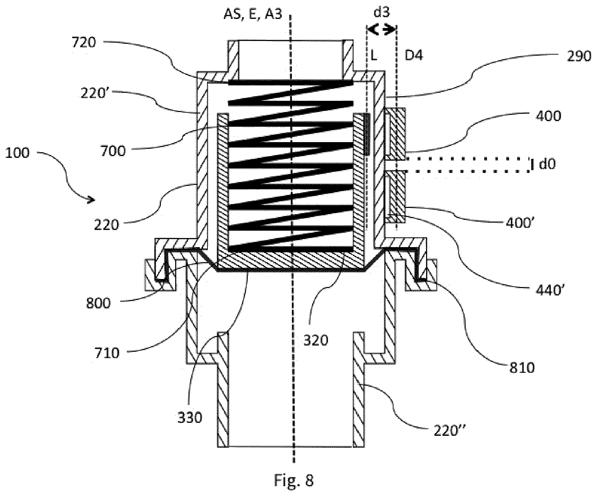

Fig. 8 is a cross sectional view of a fourth embodiment of the device 100 according to the present invention. Said embodiment differs from the second embodiment of the device by the presence of a second position sensor 400' and is otherwise substantially identical to said embodiment.

The second position sensor 400' is substantially identical to the first position sensor 440'. In particular, the second position sensor 400'comprises the first coil 440', which is electrically connected to the first electric circuit (not shown), which is e.g. a resonant circuit.

The second position sensor 400' is affixed to the third connecting region 290 of the first mantle component 220' and in contact therewith. Moreover, the second position sensor 400' extends at least along the fourth extension direction D4, and is arranged in proximity of the first position sensor 400. The two locations sensors may be arranged along the fourth direction D4 with a distance d0 between each other, wherein said distance is the distance along the fourth direction D4. The two position sensors, however, may also be substantially adjacent to one another, i.e. the aforementioned distance d0 may substantially vanish.

In this embodiment, the presence of the target member 500 in a position along the locating path L causes the first and the second position sensor to produce a first signal, *S*₁, and a second signal, *S*₂ , respectively, such that the ratio *R* = (*S*₁ - *S*₂)/(*S*₁ + *S*₂) is substantially independent of the distance between the locating path and the position sensors, i.e. on the distance between the locating path and the first mantle component 220'. The ratio R is thus insensitive to thermal variations which may cause thermal dilations or contractions of the mantle region 200 and thus lead to variations of the distance d3 between the position sensors 440, 400' and the locating path L. Moreover, the ratio R depends linearly on the position of the target member along the locating path L.

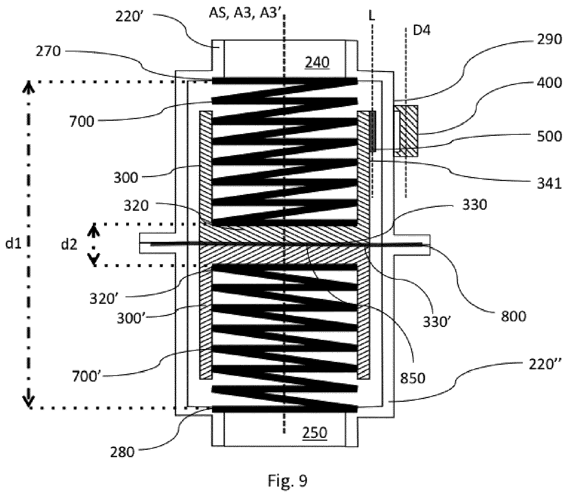

A cross sectional view of a fifth embodiment of the device according to the present invention is shown in Fig. 9. The mantle region 200 has a substantial cylindrical symmetry around the symmetry axis AS and comprises a first 220' and a second 220" mantle component, which are substantially identical and fluid-tightly connected with one another via a substantially positive fit, e.g. via a holding pawl or the likes. Any other connection between the first 220' and a second 220" mantle component, such as a material fit (e.g. by friction welding or hot plat welding) and/or a force fit (e.g. by clamping) is possible.

The first position sensor 400 is substantially identical to the first position sensor of the third embodiment of the device according to the present invention (see e.g. Fig. 6). The first position sensor 400 is affixed to the third connection region 290 of the first mantle component 220' and in contact therewith. Moreover, said sensor 400 extends at least along the fourth extension direction D4, which is substantially parallel to the symmetry axis AS. Moreover, the first coil is substantially parallel to the symmetry axis AS and extends along an arc of the third circle, said circle being comprised in the transverse cross section of the first mantle component 220'.

The detection system 600 of the sixth embodiment is substantially identical to the detection system of the third embodiment of the present invention, which is shown in Fig. 6 and described above. In particular, the third axis A3 substantially coincides with the symmetry axis AS. Moreover, the second end portion 720 of the spring 700 of the first detection system 600 is connected to a first connection region 270 of the first mantle component 220.

The device 100 comprises an additional measurement element 300' and an additional spring 700'. The structural features (e.g. the shape, the symmetries, the presence, the shape and the position of the external surfaces) of the additional measurement element 300' and of the additional spring 700' are in particular substantially identical to the structural features of the measurement element 300 and of the spring 700, respectively. In particular, the additional measurement element 300' and an additional spring 700' are substantially identical to the measurement element 300 and to the spring 700, respectively.

The additional measurement element 300' and the measurement element 300 may, however, differ by their mass, by their dimensions, and/or by the material, by which they are constituted. Similarly, the additional spring 700' and the spring 700 may be of different type, may be constituted by different materials (and thus may have different resilient properties), and/or may have different resting length.

The third axis A3' of the additional measurement element 300' substantially coincides with the symmetry axis AS. Further, the second end portion 720' of the additional spring 700' is connected to a second connection region 280 of the second mantle component 220.

The separator consists of a substantially disk-shaped membrane 800 and comprises a ring-shaped border region 810 and a central region. At least part of the membrane, e.g. at least the central region 890 thereof, is elastically deformable along the symmetry axis AS. At least said part of the membrane 800 is composed by at least a plastic component, so that it may be deformed along the symmetry axis AS by e.g. the measurement element 300 without exerting a significant reaction force on the measurement element.

The membrane, e.g. the border region 810 thereof, builds a substantially positive connection with the first 200' and the second 220" mantle component. Preferably, the membrane 800, e.g. the border region 810 thereof, is grouted between the first 220' and the second 220" mantle components. At least a connecting portion 850 of the membrane 800 is in contact with at least part of the second surface 330 of the measurement element 300 as well as with at least part of the second surface 330' of the additional measurement element 300'. In this embodiment the membrane 800 constitutes the fluid tight separator dividing the fluid conduit in a first volume 240 and in a second volume 250.

The additional measurement element 300' and the measurement element 300 are arranged specular to one another with respect to a reflection plane (not shown), wherein the reflection plane is the plane comprising the connecting portion 850 of the membrane 800. Similarly, the additional spring 700' is arranged specular to the spring 700 with respect to the reflection plane.

Moreover, the distance d1 along the symmetry axis AS between the first 270 and the second 280 connection region is lower than the sum of the resting length L0 of the spring 700, of the resting length L0' of the additional spring 700, and of the distance d2 along the locating path L between the first surface 320 of the measurement element 330 and the first surface 320' of the additional measurement element 300', that is d1 < L0 + L0' + d2.

This way, both the spring 700 and the additional spring 700' are compressed along the symmetry axis AS. Therefore, when the measurement element 300 and the additional measurement element 300' are in their neutral position, both the spring 700 and the additional spring 700' exert a force on said measurement elements 300, 300'. Consequently, no preload force has to be exceeded by the differential pressure in order to move the measurement element 300 and the additional measurement element 300' away from their corresponding neutral position. Therefore, even a relatively low differential pressure is measurable, since such a differential pressure is sufficient to cause a detectable movement of said measurement elements 300, 300'.

Moreover, the force exerted by the springs 700 and the force exerted by the additional spring 700' generate a fluid-tight force fit connecting the connecting portion 850 of the membrane 800 with at least part of the second surface 330 of the measurement element 300 and with at least part of the second surface 330' of the additional measurement element 300'.

The device 100 may comprise an additional target member (not shown) affixed to the additional measurement element and an additional position sensor (not shown) affixed to the second mantle component 220". Said additional elements would allow for an additional estimation of the differential pressure and would therefore improve the reliability and/orthe precision of the measure by e.g. performing a weighted average of the estimations of the differential pressure.

In particular, the additional target member may be arranged specular to the target member 500 with respect to the reflection plane. Moreover, the additional position sensor and the first position sensor 400 may be arranged specular to one another with respect to the reflection plane. The additional target member and the additional position sensor may be substantially identical to the target member 500 and the to first position sensor 400, respectively.

The third connection region 290 of the first mantle component 220' and the connection portion 341 of the measurement element 300 may also be substantially flat, i.e. the first mantle component 220' and the measurement element 300 may have only a partial cylindrical symmetry. In this case, the first coil 440 is a substantially flat spiral. The first position sensor 440 and the target member are substantially flat as well.

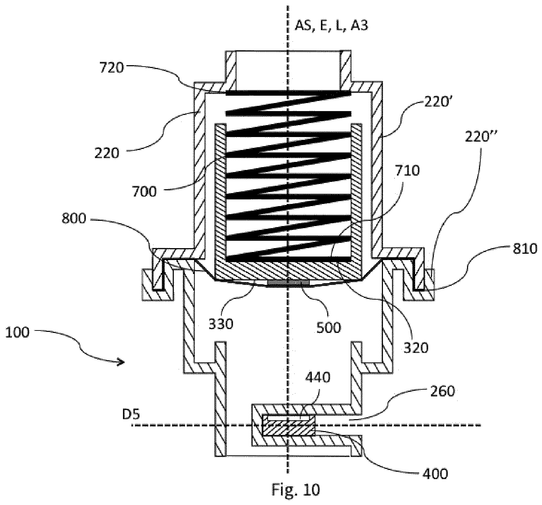

Fig. 10 is a cross sectional view of a sixth embodiment of the device 100 according to the present invention. The mantle region 200 has a substantial cylindrical symmetry around a symmetry axis AS and comprises a first 220' and a second 220" mantle component, which are fluid-tightly connected via a substantially positive fit (e.g. by a holding pawl or the likes) with one another. Any other connection between the first 220' and a second mantle component 220", such as a material fit (e.g. by friction welding or hot plat welding) and/or a force fit (e.g. by clamping) is possible. The second mantle component 220" comprises a recess 260 extending in a fifth extension direction D5, which is substantially perpendicular to the symmetry axis AS.

The detection system 600 is substantially identical to the detection system of the first embodiment of the device according to the present invention, depicted in Fig. 2a and Fig. 2b. In particular, the measurement element 300 is a hollow cylinder with a third axis A3, the third axis substantially coinciding with the symmetry axis AS. Moreover, the target member 500 consists of a metallic element, i.e. a metallic disk, which is arranged substantially at the center of the second surface 330 of the measurement element 300.

Further, the first resilient element is a spring 700 and extends along the extension line E, the extension line E substantially coinciding with the third axis A3. The first end portion 710 of the spring is connected to the first surface 320 of the measurement element 300, while the second end portion 720 of the spring 700 is connected with the first mantle component 220'.

The separator consists of a substantially disk-shaped membrane 800, which is substantially identical to the membrane of the second embodiment of the device 100 depicted in Fig. 5. The membrane, e.g. the border region 810 thereof, builds a substantially positive connection with the first 200' and the second 220" mantle component. Preferably, the membrane 800, e.g. border region 810 thereof, is grouted between the first 220' and the second 220" mantle components.

Part of the membrane 800 is in contact with part of the second surface 330 of the measurement element 300. More specifically, part of the membrane 800 and part of the second surface 330 are fluid-tightly connected. The target member 500 is arranged between the second surface 330 and the membrane 800, and in contact therewith.

The first position sensor 400 is inserted in the recess 260 and is in contact with the second mantle component 220". The first position sensor 400 extends at least along the fifth extension direction D5. In particular, the first position sensor 400 may be an inductive sensor. The first position sensor 400 comprises the first coil 440, electrically connected to the first electric circuit (not shown), which is e.g. a resonant circuit.

The first coil 440 is a substantially flat, substantially round spiral perpendicular to the symmetry axis. Further, the first coil 440 and the target member 500 are arranged substantially in front to each other. Therefore, the symmetry axis AS and the operating direction are substantially parallel to each other, e.g. they are coincident.

The differential pressure acting on the measurement element induces a movement of the measuring element 300 along the symmetry axis AS, i.e. the locating path L is substantially parallel to the symmetry axis and is thus parallel to the operating direction of the first position sensor 400. Moreover, the movement of the measurement element 300 modifies the position of the target member 500 along the locating path L. A variation of the position of the target member 500 with respect to the first coil 440 and along the locating path L triggers a variation of the electric current and/or of the tension in the first electric circuit. The latter variation allows for evaluating the position of the target member 500 with respect to the first position sensor 400 along the operating direction.

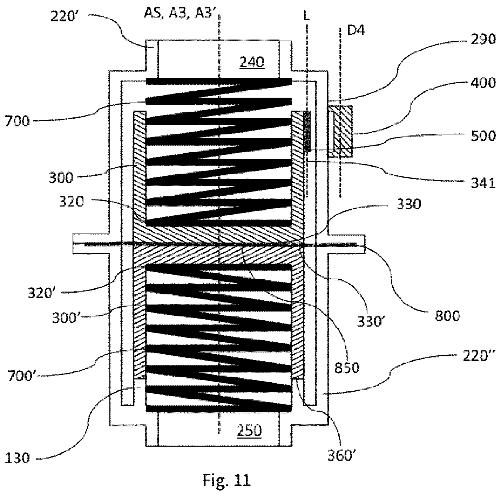

A cross sectional view of a seventh embodiment of the device 100 according to the present invention is depicted in Fig. 11. The seventh embodiment differs from the fifth embodiment of the device by the presence of a stopping element and is otherwise substantially identical to said embodiment.

The stopping element is a substantially annular protrusion 130 of the second mantle component 220", mantle component which in this case may not be substantially identical to the first mantle component 220'. The annular protrusion 130 has a substantial cylindrical symmetry around the symmetry axis AS and its radius is substantially equal to the radius of the substantially annular border 360' of the additional measurement element 300'.

When the measurement element 300 and the additional measurement element 300' are in their respective neutral position, the annular protrusion 130 is in contact with the border 360' of the additional measurement element 300'.

Generally, the stopping element may be formed so that the measurement element's movement is limited at any position along the locating path, such as the neutral position, a positive or, as the case may be, a negative end position, or any intermediary position.

The annular protrusion 130 limits the movement of the additional measurement element 300, and thus the movement of the measurement element 300, along the locating path L. More specifically, the annular protrusion 130 prevents the measurement element 300 from moving from its resting position towards the second mantle component 220" along the locating path L. In this case, the device 100 according to the present invention may detect differential pressures only when the local pressure of the fluid inside the first volume 240 is lower than the local pressure of the fluid inside the second volume 250.

| | | | |
|---|---|---|---|
| 100 | Device | 720 | Second end point |
| 110a-d | Connecting bolt | 800 | Membrane |
| 120a-d | Connecting nut | 810 | Border region |
| 200 | Mantle region | 820 | First circular portion |
| 210 | Fluid conduit | 830 | Second circular portion |
| 220 | Mantle component | 840 | First external surface |
| 221 | Cylindrical conduit | 845 | Second external surface |
| 222a-d | Hollow elements | 850 | Connecting portion |
| 223 | Cylindrical tank | 860 | Alignment hole |
| 224 | Circular groove | 870 | First circular protrusion |
| 225 | Connection opening | 871 | Second circular protrusion |
| 226 | Base | 880 | Annular region |
| 227 | Alignment component | 890 | Central Region |
| 228 | Alignment pin | 1100 | Hydraulic circuit |
| 229 | Lateral surface | 1110 | First section |
| 230a-d | Connecting ducts; | 1120 | Second section |
| 231 | Border | 1130 | Third section |
| 240 | Firstvolume | 1140 | Hydraulic pump |
| 250 | Second Volume | 1150a | Heat exchanger |
| 300 | Measurement element | 1150b | Heat exchanger |
| 310 | Circular base | 1160 | Burner |
| 320 | First surface | A1 | First Axis |
| 330 | Second surface | A2 | Second Axis |
| 340 | Lateral Surface | A3 | Third Axis |
| 350 | Internal volume | A4 | Fourth Axis |
| 400 | First position sensor | AS | Symmetry axis |
| 440 | First coil | E | Extension line |
| 500 | Target member | L0 | Resting length |
| 600 | Detection system | D4 | Fourth extension direction |
| 700 | First resilient element | D5 | Fifth extension direction |
| 710 | First end point | L | Locating path |

## Claims

1. Device (100) for measuring the pressure of a fluid comprising:
a mantle region (200) defining a fluid conduit (210);
a detection system (600) comprising a measurement element (300), at least a first resilient element (700), and a target member (500), wherein at least a portion of the measurement element (300) is arranged inside the fluid conduit (210), wherein the first resilient element (700) is configured to exert a resilient force on the measurement element (300), the resilient force opposing at least a displacement of the measurement element (300) along a locating path (L) with respect to a neutral position, and wherein the target member (500) is arranged inside the fluid conduit (210), at least a first portion thereof being arranged in a fixed position with respect to the measurement element (300);
the measurement element (300) having a first surface (320) and a second surface (330), wherein the first (320) and the second (330) surfaces are arranged generally opposite to one another; and
at least a first position sensor (400) for evaluating the position of at least the first portion of the target member (500) along the locating path (L), wherein the first position sensor (400) is arranged outside the fluid conduit (210) in a fixed position with respect to the mantle region (200); and wherein
at least a portion of the measurement element (300) is movable along the locating path (L) by a displacement force acting on the measurement element (300), the displacement force being generated by a difference between the local pressure of a fluid acting on the first surface (320) and the local pressure of a fluid acting on the second surface (330), and wherein
the position of at least the first portion of the target member (500) along the locating path (L) with respect to the first position sensor (400) depends on the displacement force,
**characterized in that**
the device (100) further comprises a second position sensor (400') and the first position sensor (400) and the second position sensor (400') are arranged in proximity to one another on the mantle region (200) in such a way that, for at least a position of the target member (500) on the locating path (L), both the first position sensor (400) and the second position sensor (400') are able to sense the target member (500).

2. Device (100) according to claim 1, wherein the first resilient element (700) is a spring.

3. Device (100) according to claim 1 or 2 further comprising a fluid tight separator between a first and a second volume (220, 230) of the fluid conduit (210), wherein the separator comprises at least a membrane (800), the membrane (800) being affixed to the mantle region (200), so that the local pressure of the fluid acting on the first surface (320) is exerted by the fluid in the first volume (220) and the local pressure of the fluid acting on the second surface (330) is exerted by the fluid in the second volume (230).

4. Device (100) according to any one of the preceding claims further comprising a second resilient element (700').

5. Device (100) according to any one of the preceding claims, wherein at least a portion of the first position sensor (400) extends along a curved and/or a flat plane.

6. Device (100) according to any one of the preceding claims, wherein the first position sensor (400) has an operating region with an operating direction, wherein the locating path (L) is non-perpendicular to the operating direction.

7. Device (100) according to any one of the preceding claims, wherein:
• the first position sensor (400) is an inductive sensor and the target member (500) is a magnetic element; or
• the first position sensor (400) is a capacitive sensor and the target member (500) is an electrically conductive or a dielectric element.

8. Device (100) according to any one of the preceding claims, wherein the target member (500) is affixed to the measurement element (300) or the target member (500) is integral with the measurement element (300).

9. Device (100) according to any one of the preceding claims, wherein the target member (500) is affixed to the first resilient element (700) or the target member (500) is integral with the first resilient element (700).

10. Device (100) according to any one of the preceding claims, wherein at least a part of the first resilient element (700) forms the target member (500).

11. Device (100) according to any one of the preceding claims, wherein the measurement element (300), the detection system (600), and/or at least a part of the device (100) are produced using a multi-component injection moulding process, a metal insert injection moulding process, a metallic coating process, and/or a film back injection moulding.

12. Device (100) according to any one of the preceding claims, wherein at least a part the target member (500), at least a part of the first resilient element (700), and/or at least a part of the measurement element (300) are composed of an electrically conductive plastic component.

13. Device (100) according to any one of the preceding claims further comprising processing means connected to the first position sensor (400),
wherein the processing means is configured to: receive an output signal of the first position sensor (400) as a first input, and, from said signal, determine the difference between the local pressure of the fluid acting on the first surface (320) and the local pressure of the fluid acting on the second surface (330), and
wherein said determination is based on at least a mechanical property of the measurement element (300), a mechanical property of the first resilient element (700), a material property of the first resilient element (700), a geometrical property of the target member (500), an electromagnetic property of the target member (500), and/or an electromagnetic property of the first position sensor (400).

14. Device (100) according to any one of the preceding claims, further comprising at least one temperature sensor arranged inside the fluid conduit (210) and/or on the mantle region (200) and connected to the processing means, wherein the processing means is configured to receive an output signal of
the at least one temperature sensor as second input, and wherein said determination is further based on the second input signal.

## Patentansprüche

1. Vorrichtung (100) zum Messen des Drucks eines Fluids, umfassend:
eine Mantelregion (200), die eine Fluidleitung (210) bestimmt;
ein Detektionssystem (600), das ein Messelement (300), mindestens ein erstes elastisches Element (700), und ein Zielglied (500) umfasst, wobei mindestens ein Teil des Messelements (300) im Inneren der Fluidleitung (210) angeordnet ist, wobei das erste elastische Element (700) konfiguriert ist eine Federkraft auf das Messelement (300) auszuüben, wobei die Federkraft mindestens einer Verschiebung in Bezug auf die neutrale Position entlang eines Anordnungspfades (L) entgegenwirkt, und wobei das Zielglied (500) im Inneren der Fluidleitung (210) angeordnet ist, wobei mindestens ein erster Teil davon in einer festen Position in Bezug auf das Messelement (300) angeordnet ist;
wobei das Messelement (300) eine erste Oberfläche (320) und eine zweite Oberfläche (330) hat, wobei die erste (320) und die zweite (330) Oberfläche im Allgemeinen gegenüberliegend zueinander angeordnet sind; und
mindestens ein erster Positionssensor (400) zum Auswerten der Position des mindestens ersten Teil des Zielglieds (500) entlang des Anordnungspfades (L), wobei der erste Positionssensor (400) außerhalb der Fluidleitung (210) in einer festen Position in Bezug auf die Mantelregion (200) angeordnet ist; und wobei
mindestens ein Teil des Messelements (300) entlang des Anordnungspfades (L) durch eine auf das Messelement (300) wirkende Verschiebungskraft beweglich ist, wobei die Verschiebungskraft durch eine Differenz zwischen dem lokalen Druck eines Fluids an der ersten Oberfläche (320) und dem lokalen Druck eines Fluids an der zweiten Oberfläche (330) erzeugt ist, und wobei
die Position von mindestens dem ersten Teil des Zielglieds (500) entlang des Anordnungspfades (L) in Bezug auf den ersten Positionssensor (400) von der Verschiebungskraft abhängt,
**dadurch gekennzeichnet, dass**
die Vorrichtung (100) ferner einen zweiten Positionssensor (400') umfasst und der erste Positionssensor (400) und der zweite Positionssensor (400') so nah zueinander auf dem Mantelbereich (200) angeordnet sind, dass für mindestens eine Position des Zielglieds (500) auf dem Anordnungspfad (L) sowohl der erste Positionssensor (400) als auch der zweite Positionssensor (400') in der Lage sind, das Zielelement (500) zu erfassen.

2. Vorrichtung (100) gemäß Anspruch 1, wobei das erste elastische Element (700) eine Feder ist.

3. Vorrichtung (100) gemäß Anspruch 1 oder 2, ferner umfassend ein fluiddichtes Trennelement zwischen einem ersten und einem zweiten Volumen (220, 230) der Fluidleitung (210), wobei das Trennelement mindestens eine Membran (800) aufweist, wobei die Membran (800) an der Mantelregion (200) befestigt ist, so dass
der lokale Druck des Fluids, der auf die erste Oberfläche (320) wirkt, durch das Fluid im ersten Volumen (220) ausgeübt wird und der lokale Druck des Fluids, der auf die zweite Oberfläche (330) wirkt, durch das Fluid im zweiten Volumen (230) ausgeübt wird.

4. Vorrichtung (100) gemäß einem der vorstehenden Ansprüche, die ferner ein zweites elastisches Element (700') aufweist.

5. Vorrichtung (100) gemäß einem der vorstehenden Ansprüche, wobei sich mindestens ein Teil des ersten Positionssensors (400) entlang einer gekrümmten und/oder planen Ebene erstreckt.

6. Vorrichtung (100) gemäß einem der vorstehenden Ansprüche, wobei der erste Positionssensor (400) einen Betriebsbereich mit einer Betriebsrichtung hat, wobei der Anordnungspfad (L) nicht senkrecht zu der Betriebsrichtung ist.

7. Vorrichtung (100) gemäß einem der vorstehenden Ansprüche, wobei:
• der erste Positionssensor (400) ein induktiver Sensor ist und das Zielglied (500) ein magnetisches Element ist; oder
• der erste Positionssensor (400) ein kapazitiver Sensor ist und das Zielglied (500) ein elektrisch leitendes oder dielektrisches Element ist.

8. Vorrichtung (100) gemäß einem der vorstehenden Ansprüche, wobei das Zielglied (500) an dem Messelement (300) befestigt ist oder das Zielglied (500) mit dem Messelement (300) integral ist.

9. Vorrichtung (100) gemäß einem der vorstehenden Ansprüche, wobei das Zielglied (500) an dem ersten elastischen Element (700) befestigt ist oder das Zielglied (500) mit dem ersten elastischen Element (700) integral ist.

10. Vorrichtung (100) gemäß einem der vorstehenden Ansprüche, wobei mindestens ein Teil des ersten elastischen Elements (700) das Zielglied (500) bildet.

11. Vorrichtung (100) gemäß einem der vorstehenden Ansprüche, wobei das Messelement (300), das Detektionssystem (600), und/oder mindestens ein Teil der Vorrichtung (100) mit einem Mehrkomponenten-Spritzgießverfahren, einem Metall-Umspritzverfahren, einem Metallbeschichtungsverfahren, und/oder einem Folienhinterspritzen hergestellt sind.

12. Vorrichtung (100) gemäß einem der vorstehenden Ansprüche, wobei mindestens ein Teil des Zielglieds (500), mindestens ein Teil des ersten elastischen Elements (700), und/oder mindestens ein Teil des Messelements (300) aus einer elektrisch leitenden Kunststoffkomponente gebildet ist.

13. Vorrichtung (100) gemäß einem der vorstehenden Ansprüche, die ferner ein mit dem Positionssensor (400) verbundenes Verarbeitungsmittel aufweist,
wobei das Verarbeitungsmittel konfiguriert ist ein Ausgangssignal des ersten Positionssensors (400) als einen ersten Eingang zu empfangen und aus diesem Signal die Differenz zwischen lokalem Druck des Fluids an der ersten Oberfläche (320) und lokalem Druck des Fluids an der zweiten Oberfläche (330) zu bestimmen und
wobei diese Bestimmung auf mindestens einer mechanischen Eigenschaft des Messelements (300), einer mechanischen Eigenschaft des ersten elastischen Elements (700), einer Materialeigenschaft des ersten elastischen Elements (700), einer geometrischen Eigenschaft des Zielglieds (500), einer elektromagnetischen Eigenschaft des Zielglieds (500), und/ oder einer elektromagnetischen Eigenschaft des ersten Positionssensors (400) basiert.

14. Vorrichtung (100) gemäß einem der vorstehenden Ansprüche, die ferner mindestens einen Temperatursensor aufweist, der im Inneren der Fluidleitung (210) und/ oder an der Mantelregion (200) angeordnet ist und mit dem Verarbeitungsmittel verbunden ist, wobei das Verarbeitungsmittel konfiguriert ist ein Ausgangssignal von mindestens einem Temperatursensor als zweiten Eingang zu empfangen und wobei die Bestimmung ferner auf dem zweiten Eingangssignal basiert.

## Revendications

1. Dispositif (100) en vue de la mesure de la pression d'un fluide comprenant :
une région de manteau (200) définissant un conduit de fluide (210) ;
un système de détection (600) comprenant un élément de mesure (300), au moins un premier élément élastique (700) et un élément-cible (500), dans lequel au moins une partie de l'élément de mesure (300) est agencée à l'intérieur du conduit de fluide (210), dans lequel le premier élément élastique (700) est configuré pour exercer une force élastique sur l'élément de mesure (300), la force élastique s'opposant au moins à un déplacement de l'élément de mesure (300) le long d'un trajet de positionnement (L) par rapport à une position neutre, et dans lequel l'élément cible (500) est agencé à l'intérieur du conduit de fluide (210), au moins une première partie de celui-ci étant agencée dans une position fixe par rapport à l'élément de mesure (300) ;
l'élément de mesure (300) possédant une première surface (320) et une seconde surface (330), dans lequel la première (320) et la seconde (330) surfaces sont agencées généralement en position opposée l'une à l'autre ; et
au moins un premier capteur de position (400) afin d'évaluer la position d'au moins la première partie de l'élément cible (500) le long du trajet de positionnement (L), dans lequel le premier capteur de position (400) est agencé en dehors du conduit de fluide (210) dans une position fixe par rapport à la région de manteau (200) ; et dans lequel au moins une partie de l'élément de mesure (300) est mobile le long du trajet de positionnement (L) par une force de déplacement agissant sur l'élément de mesure (300), la force de déplacement étant générée par une différence entre la pression locale d'un fluide agissant sur la première surface (320) et la pression locale d'un fluide agissant sur la seconde surface (330), et dans lequel
la position d'au moins la première partie de l'élément cible (500) le long du trajet de positionnement (L) par rapport au premier capteur de position (400) dépend de la force de déplacement,
**caractérisé en ce que**
le dispositif (100) comprend par ailleurs un second capteur de position (400') et le premier capteur de position (400) et le second capteur de position (400') sont agencés à proximité l'un de l'autre sur la région de manteau (200) d'une telle manière que, pour au moins une position de l'élément cible (500) sur le trajet de positionnement (L), le premier capteur de position (400) et le second capteur de position (400') sont tous deux aptes à détecter l'élément cible (500).

2. Dispositif (100) selon la revendication 1, dans lequel le premier élément élastique (700) est un ressort.

3. Dispositif (100) selon la revendication 1 ou 2, comprenant par ailleurs un séparateur étanche aux liquides entre un premier et un second volume (220, 230) du conduit de fluide (210), dans lequel le séparateur comprend au moins une membrane (800), la membrane (800) étant apposée sur la région de manteau (200), de sorte que la pression locale du fluide agissant sur la première surface (320) est exercée par le fluide dans le premier volume (220) et la pression locale du fluide agissant sur la seconde surface (330) est exercée par le fluide dans le second volume (230).

4. Dispositif (100) selon une quelconque des revendications précédentes, comprenant par ailleurs un second élément élastique (700').

5. Dispositif (100) selon une quelconque des revendications précédentes, dans lequel au moins une partie du premier capteur de position (400) s'étend le long d'un plan courbe et/ou plat.

6. Dispositif (100) selon une quelconque des revendications précédentes, dans lequel le premier capteur de position (400) possède une région de fonctionnement avec une direction de fonctionnement, dans lequel le trajet de positionnement (L) est non perpendiculaire à la direction de fonctionnement.

7. Dispositif (100) selon une quelconque des revendications précédentes, dans lequel :
• le premier capteur de position (400) est un capteur inductif et l'élément cible (500) est un élément magnétique ; ou
• le premier capteur de position (400) est un capteur capacitif et l'élément cible (500) est un élément conducteur électriquement ou diélectrique.

8. Dispositif (100) selon une quelconque des revendications précédentes, dans lequel l'élément cible (500) est apposé sur l'élément de mesure (300) ou l'élément cible (500) est solidaire de l'élément de mesure (300).

9. Dispositif (100) selon une quelconque des revendications précédentes, dans lequel l'élément cible (500) est apposé sur le premier élément élastique (700) ou l'élément cible (500) est solidaire du premier élément élastique (700).

10. Dispositif (100) selon une quelconque des revendications précédentes, dans lequel au moins une partie du premier élément élastique (700) forme l'élément cible (500).

11. Dispositif (100) selon une quelconque des revendications précédentes, dans lequel l'élément de mesure (300), le système de détection (600), et/ou au moins une partie du dispositif (100) sont produits en utilisant un processus de moulage par injection multi-composantes, un processus de moulage par injection d'un insert en métal, un processus de revêtement métallique et/ou un moulage d'injection arrière de film.

12. Dispositif (100) selon une quelconque des revendications précédentes, dans lequel au moins une partie de l'élément cible (500), au moins une partie du premier élément élastique (700) et/ou au moins une partie de l'élément de mesure (300) sont composées d'un composant conducteur électriquement en plastique.

13. Dispositif (100) selon une quelconque des revendications précédentes, comprenant par ailleurs un moyen de traitement relié au premier capteur de position (400),
dans lequel le moyen de traitement est configuré pour : recevoir un signal de sortie sur le premier capteur de position (400) en tant que première entrée et, à partir dudit signal, déterminer la différence entre la pression locale du fluide agissant sur la première surface (320) et la pression locale du fluide agissant sur la seconde surface (330), et dans lequel ladite détermination est basée sur au moins une propriété mécanique de l'élément de mesure (300), une propriété mécanique du premier élément élastique (700), une propriété matérielle du premier élément élastique (700), une propriété géométrique de l'élément cible (500), une propriété électromagnétique de l'élément cible (500) et/ou une propriété électromagnétique du premier capteur de position (400).

14. Dispositif (100) selon une quelconque des revendications précédentes, comprenant par ailleurs au moins un capteur de température agencé à l'intérieur du conduit de fluide (210) et/ou sur la région de manteau (200) et raccordé au moyen de traitement, dans lequel le moyen de traitement est configuré pour recevoir un signal de sortie d'au moins l'un des capteurs de température comme seconde entrée, et dans lequel ladite détermination est basée par ailleurs sur le second signal d'entrée.
